Europäisches Patentamt

European Patent Office

Office européen des brevets

(19)

(11) **EP 1 248 355 A1**

(12) **EUROPÄISCHE PATENTANMELDUNG**

(43) Veröffentlichungstag:
  **09.10.2002 Patentblatt 2002/41**

(51) Int Cl.⁷: **H02M 3/335**

(21) Anmeldenummer: **01108599.0**

(22) Anmeldetag: **05.04.2001**

(84) Benannte Vertragsstaaten:
  **AT BE CH CY DE DK ES FI FR GB GR IE IT LI LU MC NL PT SE TR**
  Benannte Erstreckungsstaaten:
  **AL LT LV MK RO SI**

(71) Anmelder:
  • **Institut für angewandte Biotechnik und Systemanalyse an der Universität Witten/Herdecke GmbH**
   **58455 Witten (DE)**
  • **FRAUNHOFER-GESELLSCHAFT ZUR FÖRDERUNG DER ANGEWANDTEN FORSCHUNG E.V.**
   **80636 München (DE)**

(72) Erfinder:
  • **Geneiss, Volker**
   **59590 Geseke (DE)**

  • **Middendorf, Andreas**
   **13353 Berlin (DE)**
  • **Griese, Hans-Jörg**
   **12205 Berlin (DE)**
  • **Wolff, Elmar**
   **58313 Herdecke (DE)**
  • **Glotzbach, Ulrich**
   **58454 Witten (DE)**
  • **Funk, Traugott**
   **51429 Bergisch-Gladbach (DE)**

(74) Vertreter: **Hilleringmann, Jochen, Dipl.-Ing. et al Patentanwälte von Kreisler-Selting-Werner, Bahnhofsvorplatz 1 (Deichmannhaus) 50667 Köln (DE)**

(54) **Vorrichtung zur Transformation einer Primärspannung in eine Sekundärspannung mit mindestens einem Schaltnetzteil**

(57)  Die Vorrichtung weist mindestens ein Schaltnetzteil (10) auf, das als Resonanzkoppler mit zwei Schwingkreisen ausgeführt ist, welche die gleiche Resonanzfrequenz und möglichst dicht aufeinander abgestimmte Güten aufweisen. Zur Ansteuerung des Primärschwingkreises (38) dient eine Treiberschaltung (20), die als Transistorvollbrückenschaltung ausgebildet ist. Im Sekundärschwingkreis (32) befindet sich eine Gleichrichterschaltung (57). Beide Schwingkreise sind über einen Transformator (46) magnetisch miteinander gekoppelt. Die Primär- und Sekundärwicklungen dieses Transformators (46) sind Teil der Schwingkreise (38,52) und gehen in die Bestimmung der Resonanzfrequenz und Güten dieser Schwingkreise (38,52) mit ein. Das gesamte Schaltnetzteil ist in Mikrointegrationstechnik aufgebaut; sämtliche Verbindungsleitungen sind von ihrer Länge und Ausgestaltung derart konzipiert, dass sie die Resonanzfrequenz und Güten der Schwingkreise (38,52) mitbestimmen. Das Gehäuse (86) des Schaltnetzteils weist als Bestandteile die Induktivitäten bzw. magnetische Elemente der Induktivitäten (16,64) eingangs- und ausgangsseitiger Tiefpassfilter (14,62) auf.

Fig.1

EP 1 248 355 A1

**Beschreibung**

Die Erfindung betrifft eine Vorrichtung zur Transformation einer Primärspannung in eine Sekundärspannung mit mindestens einem Schaltnetzteil, das auf dem Resonanzwandlerprinzip mit Phasenschieber beruht, wie z. B. aus US-A-6 178 099 und US-A-5 910 886 bekannt ist.

Schaltnetzteile sind grundsätzlich bekannt und werden in einer Vielzahl von Ausgestaltungen ausgeführt. Wie jeder elektrische Verbraucher verursachen auch Schaltnetzteile elektrische Verluste. Wegen der Fülle an Einsatzbereichen für Schaltnetzteile ist man bestrebt, die Verlustleistungen so gering wie möglich zu halten. Eine Möglichkeit zur Realisierung möglichst kleiner Verlustleistungen besteht darin, die Schaltnetzteile zu miniaturisieren.

Der Erfindung liegt die Aufgabe zu Grunde, ein Schaltnetzteil zur Transformation einer Primärspannung in eine Sekundärspannung zu schaffen, das sich durch eine extrem geringe Verlustleistung, eine effektive Energieübertragung und extrem kleine Abmessungen auszeichnet.

Zur Lösung dieser Aufgabe wird mit der Erfindung eine Vorrichtung zur Transformation einer Primärspannung in eine Sekundärspannung vorgeschlagen, wobei die Vorrichtung mindestens ein Schaltnetzteil aufweist, das versehen ist mit

- einem Gehäuse,
- einem eingangsseitigen Tiefpassfilter mit einer Induktivität und einer Kapazität,
- einer Transistorvollbrücken-Treiberschaltung mit einem mit dem Tiefpassfilter verbundenen Eingang und einem Ausgang,
- einer Steuereinheit zum Steuern der Transistorvollbrücken-Treiberschaltung, wobei die Steuereinheit einen Phasenschieber und einen mit diesem verbundenen Pulsgenerator aufweist, der seinerseits mit den Steuereingängen der Transistoren der Transistorvollbrücken-Treiberschaltung verbunden ist,
- einem Transformator mit einer Primär- und einer Sekundärwicklung und mit einem magnetischen Kopplungselement zur magnetischen Kopplung der Primär- und der Sekundärwicklung,
- einem den Ausgang der Transistorvollbrücken-Treiberschaltung mit der Primärwicklung des Transformators verbindenden Primärschwingkreis mit einer Resonanzfrequenz und einer Güte, wobei die Primärwicklung des Transformators Teil des Primärschwingkreises ist und der Primärschwingkreis unter Einschluss der Transistorvollbrücken-Treiberschaltung, der Verbindungsleitungen und der Primärwicklung des Transformators mindestens eine Kapazität und mindestens eine Induktivität aufweist,
- einer ausgangsseitigen Gleichrichterschaltung mit einem Eingang und einem Ausgang,
- einem die Sekundärwicklung des Transformators und den Eingang der ausgangsseitigen Gleichrichterschaltung verbindenden Sekundärschwingkreis mit einer Resonanzfrequenz und einer Güte, wobei die Sekundärwicklung des Transformators Teil des Sekundärschwingkreises ist und der Sekundärschwingkreis unter Einschluss der Gleichrichterschaltung, der Verbindungsleitungen und der Sekundärwicklung des Transformators eine Kapazität und eine Induktivität aufweist und wobei die Resonanzfrequenz des Primärschwingkreises im wesentlichen gleich der Resonanzfrequenz des Sekundärschwingkreises ist und die Güte des Primärschwingkreises an die Güte des Sekundärschwingkreises zur Minimierung der Differenz zwischen beiden angepasst ist,
- einem ausgangsseitigen Tiefpassfilter mit einer Induktivität und einer Kapazität,
- wobei die Induktivitäten der Tiefpassfilter magnetisch entkoppelt sind,
- einem Strom- und/oder Spannungssensor, der in den Primärschwingkreis geschaltet ist und ein Ausgangssignal an den Phasenschieber der Steuereinheit liefert, wobei
- die Steuereinheit, die Transistorvollbrücken-Treiberschaltung und der Strom- und/oder Spannungssensor als auf einem ersten Die integrierte Schaltungen und die Gleichrichterschaltung als auf einem zweiten Die integrierte Schaltung ausgeführt sind,
- das erste und das zweite Die auf einer Leiterplatte angeordnet sind, die die übrigen Schaltungselemente der Tiefpassfilter des Primär- und Sekundärschwingkreises und Verbindungsleitungen aufweist, deren Länge und Ausgestaltung zur Erzielung der Resonanzfrequenz und Güte der beiden Schwingkreise gewählt sind, und
- die Induktivitäten der Tiefpassfilter als magnetisch entkoppelte Teile des Gehäuses ausgebildet sind.

Gemäß einer alternativen Ausgestaltung der Erfindung wird eine Vorrichtung mit mindestens einem Schaltnetzteil vorgeschlagen, das versehen ist mit

- einem Gehäuse,
- einem eingangsseitigen Tiefpassfilter mit einer Induktivität und einer Kapazität,
- einer Transistorvollbrücken-Treiberschaltung mit einem mit dem Tiefpassfilter verbundenen Eingang und einem Ausgang,
- einer Steuereinheit zum Steuern der Transistorvollbrücken-Treiberschaltung, wobei die Steuereinheit einen Phasenschieber und einen mit diesem verbundenen Pulsgenerator aufweist, der seinerseits mit den Steuereingängen der Transistoren der Transistorvollbrücken-Treiberschaltung verbunden ist,

- einem Transformator mit einer Primär- und einer Sekundärwicklung und mit einem magnetischen Kopplungselement zur magnetischen Kopplung der Primär- und der Sekundärwicklung,
- einem den Ausgang der Transistorvollbrücken-Treiberschaltung mit der Primärwicklung des Transformators verbindenden Primärschwingkreis mit einer Resonanzfrequenz und einer Güte, wobei die Primärwicklung des Transformators Teil des Primärschwingkreises ist und der Primärschwingkreis unter Einschluss der Transistorvollbrücken-Treiberschaltung, der Verbindungsleitungen und der Primärwicklung des Transformators mindestens eine Kapazität und mindestens eine Induktivität aufweist,
- einer ausgangsseitigen Gleichrichterschaltung mit einem Eingang und einem Ausgang,
- einem die Sekundärwicklung des Transformators und den Eingang der ausgangsseitigen Gleichrichterschaltung verbindenden Sekundärschwingkreis mit einer Resonanzfrequenz und einer Güte, wobei die Sekundärwicklung des Transformators Teil des Sekundärschwingkreises ist und der Sekundärschwingkreis unter Einschluss der Gleichrichterschaltung, der Verbindungsleitungen und der Sekundärwicklung des Transformators eine Kapazität und eine Induktivität aufweist und wobei die Resonanzfrequenz des Primärschwingkreises im wesentlichen gleich der Resonanzfrequenz des Sekundärschwingkreises ist und die Güte des Primärschwingkreises an die Güte des Sekundärschwingkreises zur Minimierung der Differenz zwischen beiden angepasst ist,
- einem ausgangsseitigen Tiefpassfilter mit einer Induktivität und einer Kapazität,
- wobei die Induktivitäten der Tiefpassfilter magnetisch entkoppelt sind,
- einem Strom- und/oder Spannungssensor, der zwischen der ausgangsseitigen Gleichrichterschaltung und dem ausgangsseitigen Tiefpassfilter geschaltet ist und der ein Ausgangssignal galvanisch entkoppelt an den Phasenschieber der Steuereinheit liefert, wobei
- die Steuereinheit und die Transistorvollbrücken-Treiberschaltung als auf einem ersten Die integrierte Schaltungen und die ausgangsseitige Gleichrichterschaltung und der Strom- und/oder Spannungssensor als auf einem zweiten Die integrierte Schaltungen ausgeführt sind,
- das erste und das zweite Die auf einer Leiterplatte angeordnet sind, die die übrigen Schaltungselemente der Tiefpassfilter des Primär- und Sekundärschwingkreises und Verbindungsleitungen aufweist, deren Länge und Ausgestaltung zur Erzielung der Resonanzfrequenz und Güte der beiden Schwingkreise gewählt sind, und - die Induktivitäten der Tiefpassfilter als magnetisch entkoppelte Teile des Gehäuses ausgebildet sind.

Das erfindungsgemäße Schaltnetzteil arbeitet nach dem sogenannten Resonanzwandlerprinzip. Die Besonderheit besteht erfindungsgemäß jedoch darin, dass sowohl primärseitig als auch sekundärseitig des eigentlichen Transformators in Resonanz schwingende Schwingkreise vorgesehen sind. Diese Schwingkreise sind unter Berücksichtigung ihrer Zu- und Verbindungsleitungen und insbesondere unter Berücksichtigung der durch diese Leitungen verursachten parasitären Kapazitäten und Induktivitäten ausgelegt. Die Primär- und die Sekundärwicklung des Transformators sind ebenfalls Bestandteil des Primär- und des Sekundärschwingkreises.

Beide Schwingkreise weisen im wesentlichen die gleiche Resonanzfrequenz auf. Idealerweise sind die Resonanzfrequenzen identisch. Auch die Güten der beiden Schwingkreise sind im wesentlichen gleich. Da das Übertragungsverhältnis des Transformators von dem Verhältnis 1:1 logischerweise abweicht, können die Güten beider Schwingkreise nicht exakt gleich sein. Erfindungsgemäß ist hier vorgesehen, dass die Differenz zwischen den Güten beider Schwingkreise so klein wie möglich ist.

Eingangs- und ausgangsseitig des erfindungsgemäßen Schaltnetzteils befinden sich Tiefpassfilter, deren Induktivitäten magnetisch entkoppelt sind. Der Ausgang des eingangsseitigen Tiefpassfilters ist mit einer Treiberschaltung verbunden, bei der es sich um eine Transistorvollbrückenschaltung handelt. Die einzelnen Transistoren dieser Treiberschaltung sind über eine Regeleinrichtung angesteuert. Diese Regeleinrichtung weist einen Pulsgenerator auf, der die Ansteuerimpulse für die einzelnen Transistoren erzeugt. Die Phasenlage dieser Ansteuerungsimpulse wird durch einen Phasenschieber der Regeleinheit erzeugt. Dieser Phasenschieber erhält von einem Strom- und/oder Spannungssensor ein Eingangssignal. Über diesen Sensor wird sensiert, welcher Strom bzw. welche Spannung aktuell am Ausgang des Schaltnetzteils gegeben ist.

Ausgangsseitig befindet sich vor dem Tiefpassfilter eine Gleichrichterschaltung. Während die Transistorvollbrücken-Treiberschaltung Bestandteil des Primärschwingkreises ist, ist die Gleichrichterschaltung Bestandteil des Sekundärschwingkreises. Beide Schwingkreise sind über das magnetische Kopplungselement des Transformators gekoppelt. Die Kapazitäten und Induktivitäten beider Schwingkreise sind unter Einschluss der Primär- und Sekundärwicklungen des Transformators, der Länge und Ausgestaltung der Zuleitungen sowie Verbindungsleitungen der einzelnen Elemente der Schwingkreise und der Elemente der Treiberschaltung bzw. der Gleichrichterschaltung ausgelegt.

Das Gehäuse des erfindungsgemäßen Schaltnetzteils wird zumindest teilweise von den magnetischen Elementen der Induktivitäten der beiden Tiefpassfilter gebildet. Diese Teile des Gehäuses sind magnetisch entkoppelt. Vorteilhafterweise ist das Gehäuse zweiteilig aufgebaut, wobei jeder Teil magnetisch mit jeweils einem der beiden Tiefpassfilter gekoppelt ist und beide Gehäuseteile untereinander wiederum entkoppelt sind. Ein derartiges Gehäuse aus Metall (in diesem Fall insbesondere ferromagnetischem Material) ist im Hinblick auf die elektromagnetische Verträglichkeit von Vorteil.

Zur Ansteuerung der Transistoren der Treiberschaltung werden zweckmäßigerweise Dirac-Impulse oder gaussfunktionsartige, e-funktionsartige oder kosinusquadratfunktionsartige Impulse verwendet. Sämtliche dieser Impulsformen können verwendet werden, sofern der Primärschwingkreis als Parallelschwingkreis bzw. in Serienausführung vorliegt.

Durch eine entsprechend hohe Taktung der Transistoren der Vollbrückentreiberschaltung ist es möglich, auf eine eingangsseitige Gleichrichterschaltung zu verzichten. Die Taktfrequenz ist dabei zweckmäßigerweise größer als einige kHz und insbesondere größer als 500 kHz, vorzugsweise größer als 1 MHz. Bei diesen Frequenzen kann wie gesagt auf eine Gleichrichtung am Eingang verzichtet werden. Damit ist auch ein Verzicht auf voluminöse primärseitige Kondensatoren, wie sie für die Gleichrichtung normalerweise benötigt werden, möglich.

Der Transformator weist eine Primärwicklung und eine Sekundärwicklung auf. Diese Wicklungen können in Dünnschichttechnik oder auch als Drahtwicklungen ausgeführt sein. Der magnetische Kreis des Transformators, der vorzugsweise als Planartransformator ausgeführt ist, wird jeweils über ein insbesondere ferromagnetisches Material geschlossen.

Ein weiteres wesentliches Merkmal der Erfindung besteht in der konsequenten Anwendung der Mikrointegrationstechnik. Dementsprechend sind die integrierten Schaltungen selbst nicht gehäust, vielmehr sind die Dies (ungehäustes IC) direkt auf eine Leiterplatte z. B. Flip-Chip- oder Chip-on-Board-Technologie aufgebracht und mit den Leiterbahnen verbondet. Alternativ kann man auch gehäuste Dies verwenden, die dann jedoch vorzugsweise in Chip-Scale-Package-Technik realisiert sind. Mit all diesen IC-Technologien werden parasitäre Einflüsse herkömmlicher IC-Gehäuse vermieden. Die Länge und die Ausgestaltung der Leiterbahnen auf der Leiterplatte sind entsprechend der gewünschten Resonanzfrequenz und den Güten der beiden Schwingkreise gewählt. Die Leiterplatte kann starr, flexibel oder in Starr-Flex-Technik ausgeführt sein.

Sofern der Strom- und/oder Spannungssensor sekundärseitig angeordnet ist, wird sein Ausgangssignal galvanisch entkoppelt dem Phasenschieber zugeführt. Dies erfolgt beispielsweise über einen Optokoppler.

Auf die galvanische Trennung kann dann verzichtet werden, wenn der Sensor primärseitig verschaltet ist. In diesem Fall ist er Teil des Primärschwingkreises.

Die Erfindung wird nachfolgend anhand der Zeichnung näher erläutert. Hierbei zeigen im einzelnen:

Fig. 1    die elektrische Beschaltung des erfindungsgemäßen Schaltnetzteils,

Fign. 2 und 3    perspektivische Ansichten einer flexiblen Leiterplatte mit Planartransformator in Drauf- und Unteransicht,

Fig. 4    den Planartransformator in Seitenansicht mit gegensinnig an seinen Enden umgelegter Leiterplatte,

Fig. 5    einen Schnitt durch das Gehäuse des Schaltnetzteils, und

Fig. 6    eine alternative elektrische Beschaltung für das Schaltnetzteil.

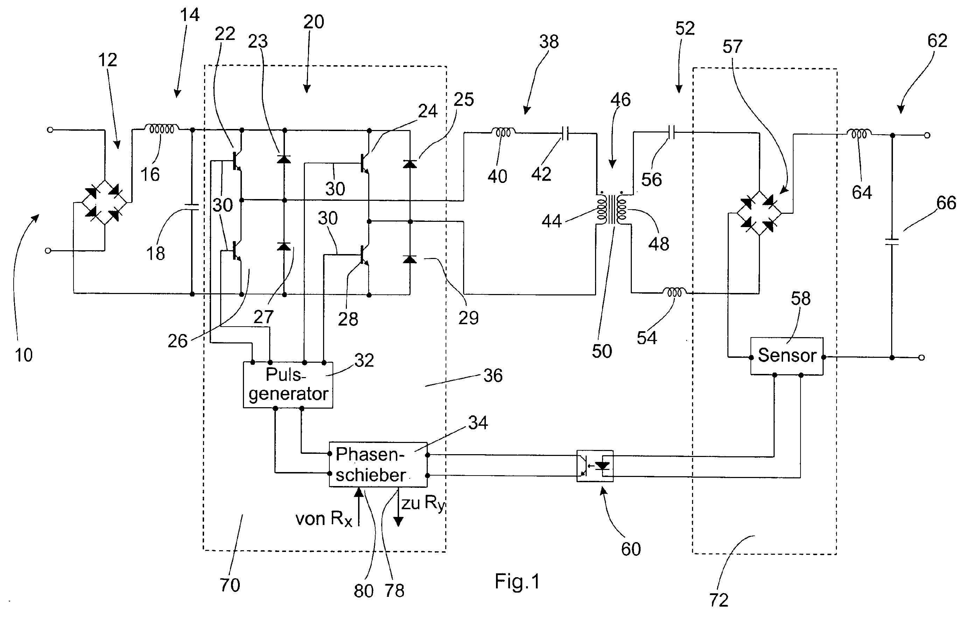

In Fig. 1 ist die elektrische Schaltung des Schaltnetzteils dargestellt, das für DC/DC, DC/AC, AC/DC oder AC/AC-Wandlung einsetzbar ist. Am Eingang 10 des Schaltnetzteils befindet sich eine optionale Gleichrichterschaltung 12, die als Diodenvollbrücke ausgeführt ist. Mit dem Ausgang dieses Gleichrichters 12 ist ein erstes Tiefpassfilter 14 mit einer Induktivität 16 und einer Kapazität 18 verbunden. Parallel zur Kapazität 18 befindet sich eine Transistorvollbrücken-Treiberschaltung 20, die aus vier Transistoren 22,24,26,28 mit zu diesen parallel geschalteten Dioden 23,25,27,29 besteht. Die Steueranschlüsse 30 der Transistoren 22-28 sind mit einem Pulsgenerator 32 verbunden, der von einem Phasenschieber 34 Eingangssignale erhält. Der Pulsgenerator 32 und der Phasenschieber 34 bilden zusammen eine Regeleinheit 36 zur Steuerung der Treiberschaltung 20 dergestalt, dass am Ausgang des Schaltnetzteils die gewünschte Leistung zur Verfügung steht.

Der Brückenzweig der Treiberschaltung 20 ist mit einem Primärschwingkreis 38 verbunden, der eine Induktivität 40 und eine Kapazität 42 aufweist und als Serienschwingkreis ausgebildet ist. Teil dieses Primärschwingkreises 38 ist aber auch die Primärwicklung 44 eines Transformators 46, der darüber hinaus eine Sekundärwicklung 48 und ein magnetisches Kopplungselement 50 aufweist.

Die Sekundärwicklung 48 des Transformators 46 ist Bestandteil eines Sekundärschwingkreises 52, der darüber hinaus noch eine Induktivität 54 und eine Kapazität 56 aufweist und mit dem der Eingang einer ausgangsseitigen Gleichrichterschaltung 57 verbunden ist. Diese Gleichrichterschaltung 57 ist ebenfalls als Diodenvollbrücke ausgebildet und weist in ihrem Ausgangszweig einen Strom- bzw. Spannungssensor 58 auf. Der Sensor 58 gibt über einen Optokoppler 60 ein die sensierte Größe (Strom und/oder Spannung) repräsentierendes Ausgangssignal an den Phasenschieber 34 der Regeleinheit 36 ab. Hinter dem Sensor 58 befindet sich ein ausgangsseitiges Tiefpassfilter 62 mit einer Induktivität 64 und einer Kapazität 66.

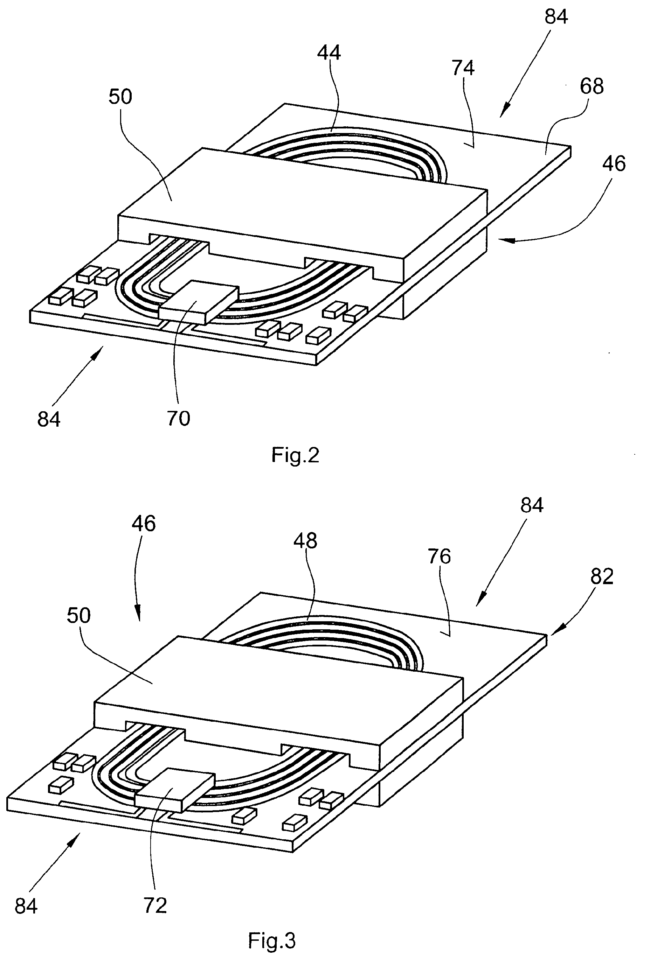

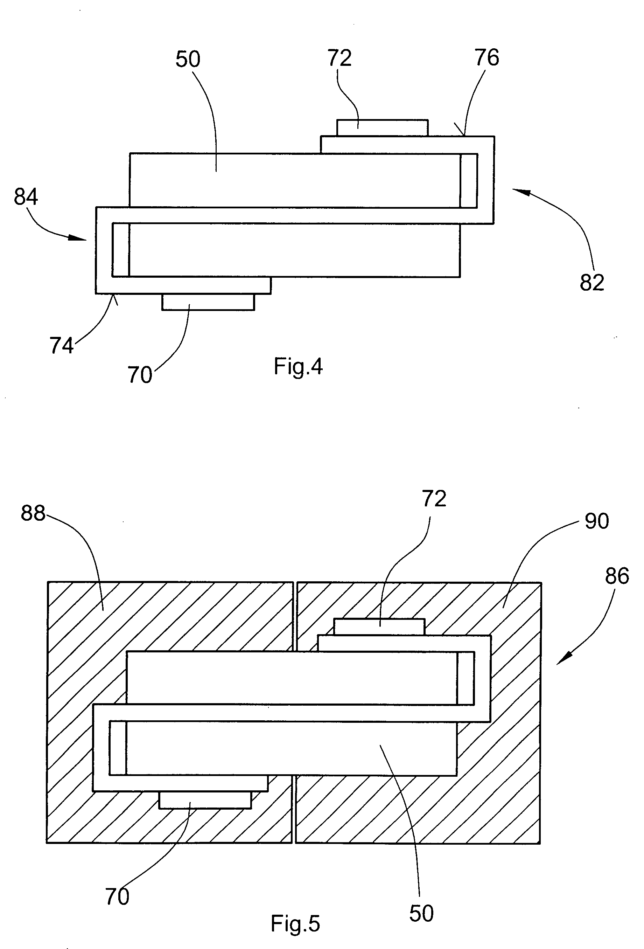

Wie man anhand der Fig. 1 erkennen kann, arbeitet das Schaltnetzteil mit einem Resonanzwandler. Die Besonderheit dieses Resonanzwandlers besteht darin, dass beide Schwingkreise 38,52 die gleiche bzw. im wesentlichen die gleiche Resonanzfrequenz aufweisen. Die Induktivitäten und Kapazitäten der beiden Schwingkreise 38,52 sowie die Wicklungen 44 und 48 des Transformators 46 sind auf einer Leiterplatte 68 (siehe Fign. 2 bis 5) angeordnet. Die Leiterbahnen auf dieser Leiterplatte 68 sind von ihrer Ausgestaltung und Länge derart konzipiert, dass die von ihnen verursachten parasitären Effekte (Induktivität und Kapazität) sich dergestalt einstellen, dass beide Schwingkreise 38,52 die gleiche Resonanzfrequenz aufweisen. In diese Überlegungen gehen auch die Halbleiterbauelemente der Transistorvollbrücken-Treiberschaltung 20 und der Gleichrichterschaltung 57 mit ein. Möglich wird all dies durch die Anwendung der Mikrointegrationstechnologie und dadurch, dass die elektronischen Komponenten des Schaltnetzteils auf zwei Die 70,72 aufgeteilt sind, wie es ebenfalls der Fig. 1 zu entnehmen ist. Das erste Die 70 umfasst dabei die Regeleinheit 36 und die Treiberschaltung 20, während das zweite Die 72 die Gleichrichterschaltung 57 und den Sensor 58 umfasst.

Diese beiden Dies 70,72 sind in BGA-Technik realisiert und direkt auf die Leiterplatte 68 gelötet oder geklebt (Flip-Chip-Technologie), und zwar zum einen auf die Oberseite 74 und zum anderen auf die Unterseite 76 der Leiterplatte 68 (siehe Fign. 2 und 3). Alternative Techniken sind Bonden, z. B. TAB.

Durch die Mikrointegration ist es möglich, die Resonanzfrequenzen beider Schwingkreise unter Einbeziehung der Leiterbahn-Ausgestaltungen und Bauteile durch Simulation und Design auf den gleichen Wert auszulegen. Auf Grund des Übersetzungsverhältnisses des Transformators 46 ist ein vollständiger Abgleich der Güten beider Schwingkreise 38,52 nicht möglich. Idealerweise sollten diese beiden Güten ebenfalls identisch sein, was man durch eine entsprechende Wahl der Dimensionierung und Auslegung der einzelnen Bauelemente realisieren kann. Ziel des Schaltungsentwurfs ist es daher, die Güten so weit wie möglich aneinander anzunähern. Damit ergibt sich dann insgesamt eine nahezu optimale und weitestgehend verlustfreie Energieübertragung vom Primärschwingkreis 38 auf den Sekundärschwingkreis 52.

Wie anhand von Fig. 1 zu erkennen ist, weist der Phasenschieber 34 noch einen weiteren Ausgang 78 und einen weiteren Eingang 80 auf. Über diese Ein- und Ausgänge 78,80 lässt sich die Regeleinheit 36 des in Fig. 1 gezeigten Schaltnetzteils mit einem anderen Schaltnetzteil verbinden. Hierdurch entsteht ein schaltungstechnisch modularer Aufbau, der es ermöglicht, mehrere Schaltnetzteile miteinander zu kombinieren, um bestimmte Ausgangsspannungen oder -ströme realisieren zu können.

Zur Ansteuerung der Transistoren 22,24,26 und 28 werden bevorzugt Dirac-Impulse insbesondere 2. Ordnung bzw. Dirac-Doppelimpulse oder Impulse verwendet, deren Form sich gemäß einer der nachfolgend angegebenen Gleichungen beschreiben lässt:

$$f(x) = a \, e^{-bx^2}$$

$$f(x) = a \cos^2(bx)$$

$$f(x) = a \sin x/x$$

Diese Impulse werden mit einer Frequenz von größer 500kHz und insbesondere mit einer Frequenz im MHz-Bereich erzeugt. Bei einer derartig hohen Schaltfrequenz ist eine Gleichrichtung der Eingangsspannung, wie sie bei der Schaltung gemäß Fig. 1 in Form der Gleichrichterschaltung 12 vorgesehen ist, nicht erforderlich. Insoweit ist die Gleichrichterschaltung 12 nicht notwendigerweise Bestandteil des hier beschriebenen Schaltnetzteils.

Durch die Vermeidung scharfkantiger Impulse wird das Entstehen von Überschwingern und damit das Entstehen von Oberwellen weitgehend vermieden, was im Hinblick auf EMV und die Effizienz der Energieübertragung von Vorteil ist.

Der Aufbau des Schaltnetzteils in Mikrointegrationstechnologie ist in den Fign. 2-5 wiedergegeben. Dort ist auch zu erkennen, dass der Transformator 46 als sogenannter Planartransformator in Dünnschichttechnik aufgebaut ist. Hierbei sind die Primär- und Sekundärwicklungen 44,48 als z. B. runde, ovale, elliptische, rechteckige spiralförmig verlaufende Leiterbahnen der Leiterplatte 68 ausgebildet, wobei die Leiterbahnen der Primärwicklung 44 auf der Oberseite 74 und die Leiterbahnen der Sekundärwicklung 48 auf der Unterseite 76 der Leiterplatte 68 ausgebildet sind. Die spiralförmigen Leiterbahnen von Primärund Sekundärwicklung 44,48 sind durch das magnetische Kopplungselement 50 umschlossen, das sich ober- und unterhalb der Leiterplatte 68 erstreckt. Die Leiterplatte 68 ist vorzugsweise durchgehend flexibel gestaltet und an ihren seitlich aus dem Kopplungselement 50 vorstehenden Enden 82,84 gegensinnig um das magnetische Kopplungselement 50 des Transformators 46 gelegt. Das magnetische Kopplungselement 50 besteht aus einem hartmagnetischen Material, wie beispielsweise ferromagnetischem Material bzw. einem Ferritmaterial.

Die zuvor beschriebene Struktur gemäß den Fign. 2 bis 4 bildet den Kern eines in diesem Fall zweiteiligen Gehäuses 86, dessen beide Hälften 88,90 aus in diesem Fall weichmagnetischem Material bestehen und Bestandteil der Induktivitäten 16 bzw. 64 der beiden Tiefpassfilter 14 und 62 und damit auch in Teilen Bestandteil des magnetischen Kreises des Transformators 46 sind. Die beiden Gehäuseteile 88,90 sind magnetisch entkoppelt. Sie geben dem Gehäuse 86 eine stabile Form und Ausgestaltung. Das Gehäuse 86 mit Transformator 46 bildet eine kraftschlüssige Einheit, indem das Gehäuse 86 den Transformator 46 formschlüssig umgibt.

Mit der zuvor beschriebenen Mikrointegrationstechnik lässt sich das Schaltnetzteil mit Subzentimeterdimensionen fertigen. Damit lässt sich das Schaltnetzteil dergestalt konzipieren, dass es in einem separaten Gehäuse direkt in der Steckdose, im Gehäuse des zu versorgenden Geräts (on-board) oder auch in der Zuleitung des zu versorgenden Geräts untergebracht werden kann. Das Schaltnetzteil ist insbesondere geeignet zur Stromversorgung im Kleinleistungsbereich, wie beispielsweise für die Akkuladung im Bereich Telefonie, für Werkzeuge und Spielzeuge.

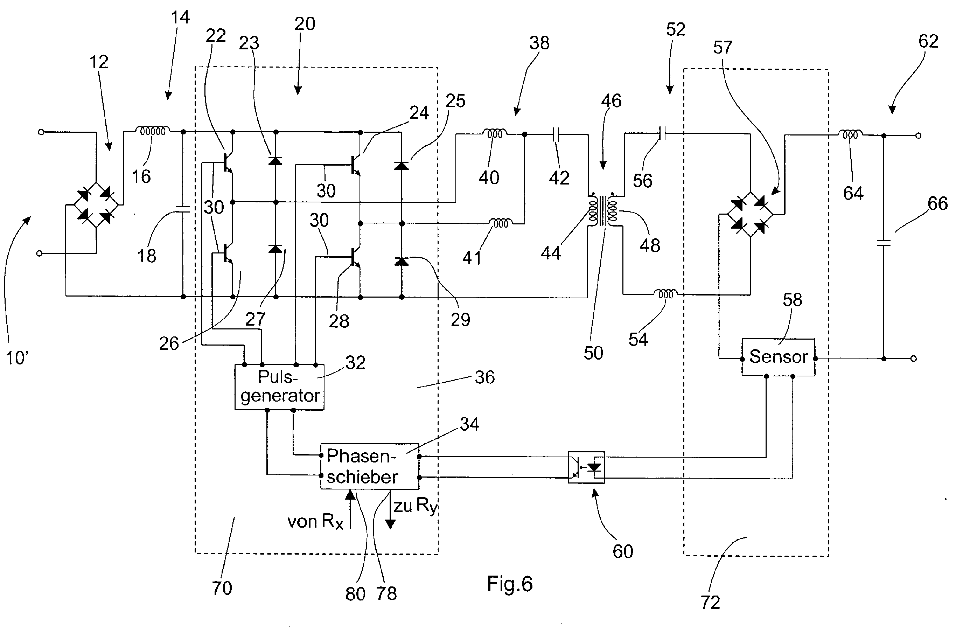

Fig. 6 zeigt ein alternatives Schaltbild eines Schaltnetzteils 10', das mit Ausnahme des Primärschwingkreises 38 identisch mit dem Schaltbild des Ausführungsbeispiels gemäß Fig. 1 ist, weshalb in Fig. 6 für bau- und/oder funktionsgleiche Bestandteile die gleichen Bezugszeichen verwendet sind.

Im Brückenzweig der Transistorvollbrücken-Treiberschaltung 20 befindet sich gemäß Fig. 6 eine Reihenschaltung aus zwei Induktivitäten 40 und 41, deren gemeinsamer Schaltungsknoten mit der Kapazität 42 verbunden ist. Der Schwingkreis 38 wird über die Primärwicklung 44 zum gemeinsamen Schaltungsknoten der beiden Transistoren 26,28 der Transistorvollbrücken-Treiberschaltung 20 geschlossen. Durch dieses Schaltungskonzept des Primärschwingkreises wird erreicht, dass immer eine Verbindung der Schwingkreise zum definierten Potential (in diesem Fall Massepotential) existiert. Damit werden Spannungsüberhöhungen, wie sie bei der Schaltung von Fig. 1 entstehen können, wenn sämtliche Transistoren 22 bis 28 sperren, abgeführt.

**Patentansprüche**

1. Vorrichtung zur Transformation einer Primärspannung in eine Sekundärspannung, mit mindestens einem Schaltnetzteil (10,10'), das versehen ist mit

- einem Gehäuse (86),
- einem eingangsseitigen Tiefpassfilter (14) mit einer Induktivität (16) und einer Kapazität (18),
- einer Transistorvollbrücken-Treiberschaltung (20) mit einem mit dem Tiefpassfilter (14) verbundenen Eingang und einem Ausgang,
- einer Steuereinheit (36) zum Steuern der Transistorvollbrücken-Treiberschaltung (20), wobei die Steuereinheit (36) einen Phasenschieber (34) und einen mit diesem verbundenen Pulsgenerator (32) aufweist, der seinerseits mit den Steuereingängen (30) der Transistoren (22,24,26,28) der Transistorvollbrücken-Treiberschaltung verbunden ist,

- einem Transformator (46) mit einer Primär- und einer Sekundärwicklung (44,48) und mit einem magnetischen Kopplungselement (50) zur magnetischen Kopplung der Primär- und der Sekundärwicklung (44,48),
- einem den Ausgang der Transistorvollbrücken-Treiberschaltung (20) mit der Primärwicklung (44) des Transformators (46) verbindenden Primärschwingkreis (38) mit einer Resonanzfrequenz und einer Güte, wobei die Primärwicklung (44) des Transformators (46) Teil des Primärschwingkreises (38) ist und der Primärschwingkreis (38) unter Einschluss der Transistorvollbrücken-Treiberschaltung (20), der Verbindungsleitungen und der Primärwicklung (44) des Transformators (46) mindestens eine Kapazität und mindestens eine Induktivität aufweist,
- einer ausgangsseitigen Gleichrichterschaltung (57) mit einem Eingang und einem Ausgang,
- einem die Sekundärwicklung (48) des Transformators (46) und den Eingang der ausgangsseitigen Gleichrichterschaltung (57) verbindenden Sekundärschwingkreis (52) mit einer Resonanzfrequenz und einer Güte, wobei die Sekundärwicklung (48) des Transformators (46) Teil des Sekundärschwingkreises (52) ist und der Sekundärschwingkreis (52) unter Einschluss der Gleichrichterschaltung (57), der Verbindungsleitungen und der Sekundärwicklung (48) des Transformators (46) eine Kapazität und eine Induktivität aufweist und wobei die Resonanzfrequenz des Primärschwingkreises (38) im wesentlichen gleich der Resonanzfrequenz des Sekundärschwingkreises (52) ist und die Güte des Primärschwingkreises (38) an die Güte des Sekundärschwingkreises (52) zur Minimierung der Differenz zwischen beiden angepasst ist,
- einem ausgangsseitigen Tiefpassfilter (62) mit einer Induktivität (64) und einer Kapazität (66),
- wobei die Induktivitäten (16,64) der Tiefpassfilter (14,62) magnetisch entkoppelt sind,
- einem Strom- und/oder Spannungssensor (58), der in den Primärschwingkreis (38) geschaltet ist und ein Ausgangssignal an den Phasenschieber (34) der Steuereinheit (36) liefert, wobei
- die Steuereinheit (36), die Transistorvollbrücken-Treiberschaltung (20) und der Strom- und/oder Spannungssensor (58) als auf einem ersten Die (70) integrierte Schaltungen und die Gleichrichterschaltung (57) als auf einem zweiten Die (72) integrierte Schaltung ausgeführt sind,
- das erste und das zweite Die (70,72) auf einer Leiterplatte (68) angeordnet sind, die die übrigen Schaltungselemente der Tiefpassfilter (14,62) des Primär- und Sekundärschwingkreises (38,52) und Verbindungsleitungen aufweist, deren Länge und Ausgestaltung zur Definition der Resonanzfrequenz und Güte der beiden Schwingkreise (38,52) gewählt sind, und

- die Induktivitäten (16,64) der Tiefpassfilter (14,62) als magnetisch entkoppelte Teile (88,90) des Gehäuses (86) ausgebildet sind.

2. Vorrichtung zur Transformation einer Primärspannung in eine Sekundärspannung mit mindestens einem Schaltnetzteil, das versehen ist mit

- einem Gehäuse (86),
- einem eingangsseitigen Tiefpassfilter (14) mit einer Induktivität (16) und einer Kapazität (18),
- einer Transistorvollbrücken-Treiberschaltung (20) mit einem mit dem Tiefpassfilter (14) verbundenen Eingang und einem Ausgang,
- einer Steuereinheit (36) zum Steuern der Transistorvollbrücken-Treiberschaltung (20), wobei die Steuereinheit (36) einen Phasenschieber (34) und einen mit diesem verbundenen Pulsgenerator (32) aufweist, der seinerseits mit den Steuereingängen (30) der Transistoren (22,24,26,28) der Transistorvollbrücken-Treiberschaltung verbunden ist,
- einem Transformator (46) mit einer Primär- und einer Sekundärwicklung (44,48) und mit einem magnetischen Kopplungselement (50) zur magnetischen Kopplung der Primär- und der Sekundärwicklung (44,48),
- einem den Ausgang der Transistorvollbrücken-Treiberschaltung (20) mit der Primärwicklung (44) des Transformators (46) verbindenden Primärschwingkreis (38) mit einer Resonanzfrequenz und einer Güte, wobei die Primärwicklung (44) des Transformators (46) Teil des Primärschwingkreises (38) ist und der Primärschwingkreis (38) unter Einschluss der Transistorvollbrücken-Treiberschaltung (20), der Verbindungsleitungen und der Primärwicklung (44) des Transformators (46) mindestens eine Kapazität und mindestens eine Induktivität aufweist,
- einer ausgangsseitigen Gleichrichterschaltung (57) mit einem Eingang und einem Ausgang,
- einem die Sekundärwicklung (48) des Transformators (46) und den Eingang der ausgangsseitigen Gleichrichterschaltung (57) verbindenden Sekundärschwingkreis (52) mit einer Resonanzfrequenz und einer Güte, wobei die Sekundärwicklung (48) des Transformators (46) Teil des Sekundärschwingkreises (52) ist und der Sekundärschwingkreis (52) unter Einschluss der Gleichrichterschaltung (57), der Verbindungsleitungen und der Sekundärwicklung (48) des Transformators (46) mindestens eine Kapazität und mindestens eine Induktivität aufweist und wobei die Resonanzfrequenz des Primärschwingkreises (38) im wesentlichen gleich der Resonanzfrequenz des Sekundärschwingkreises (52) ist und die Güte des Primärschwingkreises (38) an die Güte des Sekundärschwingkreises (52) zur Minimierung der Differenz zwischen beiden angepasst ist,

- einem ausgangsseitigen Tiefpassfilter (62) mit einer Induktivität (64) und einer Kapazität (66),
- wobei die Induktivitäten (16,64) der Tiefpassfilter (14,62) magnetisch entkoppelt sind,
- einem Strom- und/oder Spannungssensor (58), der zwischen der ausgangsseitigen Gleichrichterschaltung (57) und dem ausgangsseitigen Tiefpassfilter (62) geschaltet ist und der ein Ausgangssignal galvanisch entkoppelt an den Phasenschieber (34) der Steuereinheit (36) liefert, wobei
- die Steuereinheit (36) und die Transistorvollbrücken-Treiberschaltung (20) als auf einem ersten Die (70) integrierte Schaltungen und die ausgangsseitige Gleichrichterschaltung (57) und der Strom- und/oder Spannungssensor (58) als auf einem zweiten Die (72) integrierte Schaltungen ausgeführt sind,
- das erste und das zweite Die (70,72) auf einer Leiterplatte (68) angeordnet sind, die die übrigen Schaltungselemente der Tiefpassfilter (14,62) des Primär- und Sekundärschwingkreises (38,52) und Verbindungsleitungen aufweist, deren Länge und Ausgestaltung zur Definition der Resonanzfrequenz und Güte der beiden Schwingkreise (38,52) gewählt sind, und
- die Induktivitäten (16,64) der Tiefpassfilter (14,62) als magnetisch entkoppelte Teile (88,90) des Gehäuses (86) ausgebildet sind.

3. Vorrichtung nach Anspruch 2, **dadurch gekennzeichnet, dass** zur galvanischen Entkopplung des Ausgangssignals des Strom- und/oder Spannungssensors (58) ein Optokoppler (60) vorgesehen ist.

4. Vorrichtung nach einem der Ansprüche 1 bis 3, **dadurch gekennzeichnet, dass** sämtliche übrigen Schaltungselemente innerhalb des Gehäuses (86) angeordnet sind.

5. Vorrichtung nach einem der Ansprüche 1 bis 4, **dadurch gekennzeichnet, dass** die Induktivitäten (16,64) der Tiefpassfilter (14,62) und das magnetische Kopplungselement (50) des Transformators (46) ferromagnetische Materialien und insbesondere Ferrite aufweisen.

**6.** Vorrichtung nach einem der Ansprüche 1 bis 5, **dadurch gekennzeichnet, dass** der Pulsgenerator (32) diracförmige, gaußfunktionsförmige, e-funktionsförmige oder kosinusquadratfunktionsförmige Impulse zur Ansteuerung der Transistorvollbrücken-Treiberschaltung (20) erzeugt.

**7.** Vorrichtung nach einem der Ansprüche 1 bis 6, **dadurch gekennzeichnet, dass** die Ansteuerungsimpulse des Pulsgenerators (32) eine Frequenz von mehreren kHz, insbesondere größer als 500 kHz, und vorzugsweise im MHz-Bereich aufweisen.

**8.** Vorrichtung nach einem der Ansprüche 1 bis 7, **dadurch gekennzeichnet, dass** der Transformator (46) als Planartransformator ausgeführt ist und zwei als spiralförmige Leiterbahnen auf der oder einer Leiterplatte (68) ausgebildete Wicklungen (44,48) aufweist, die das magnetische Kopplungselement (50) kreuzen und insbesondere das als Ring ausgebildete magnetische Kopplungselement (50) durchdringen.

**9.** Vorrichtung nach einem der Ansprüche 1 bis 8, **dadurch gekennzeichnet, dass** die Leiterplatte (68) flexibel ist und zwei über das magnetische Kopplungselement (50) überstehende Enden (82,84) aufweist, die auf einander gegenüberliegenden Seiten der Leiterplatte (68) das erste und das zweite Die (70,72) sowie andere elektrische Bauelemente aufweisen und die gegensinnig um das magnetische Kopplungselement (50) gelegt sind.

**10.** Vorrichtung nach Anspruch 8 und 9, **dadurch gekennzeichnet, dass** die eine spiralförmige Wicklung auf der einen und die andere spiralförmige Wicklung auf der anderen Seite (74,76) der Leiterplatte (68) angeordnet ist.

**11.** Vorrichtung nach einem der Ansprüche 1 bis 10, **dadurch gekennzeichnet, dass** eingangsseitig eine Gleichrichterschaltung (12) vorgesehen ist, deren Ausgang mit dem eingangsseitigen Tiefpassfilter (14) verbunden ist.

**12.** Vorrichtung nach einem der Ansprüche 1 bis 11, **dadurch gekennzeichnet, dass** der Phasenschieber (34) der Steuereinheit (36) einen Ausgang (78) und einen Eingang (80) zur Verbindung mit dem Phasenschieber (34) der Steuereinheit (36) mindestens eines weiteren Schaltnetzteils aufweist.

**13.** Vorrichtung nach einem der Ansprüche 1 bis 12, **dadurch gekennzeichnet, dass** der Primärschwingkreis (38) zwei in Reihe geschaltete Induktivitäten (40,41) aufweist, deren gemeinsamer Schaltungsknoten mit der Kapazität (42) verbunden ist.

**14.** Vorrichtung nach einem der Ansprüche 1 bis 13, **dadurch gekennzeichnet, dass** mehrere Schaltnetzteile (10,10') vorgesehen sind, die eingangsund/oder ausgangsseitig parallel und/oder in Reihe geschaltet sind und deren Steuereinheiten (36) zur gemeinsamen und aufeinander abgestimmten Steuerung der Transistorvollbrücken-Treiberschaltungen (20) untereinander verbunden sind.

Fig.1

von $R_x$

zu $R_y$

Pulsgenerator

Phasenschieber

Sensor

EP 1 248 355 A1

Fig.2

Fig.3

50   72   76

84

82

74

70

Fig.4

88   72   90

86

70   50

Fig.5

Fig.6

Puls-generator

Phasen-schieber

von $R_x$

zu $R_y$

Sensor

EP 1 248 355 A1

**Europäisches Patentamt**

**EUROPÄISCHER RECHERCHENBERICHT**

Nummer der Anmeldung

EP 01 10 8599

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.7) |
|---|---|---|---|
| A,D | US 6 178 099 B1 (SCHUTTEN MICHAEL JOSEPH ET AL) 23. Januar 2001 (2001-01-23) <br> * Spalte 1, Zeile 41-56 * <br> * Abbildung 1 * | 1,2 | H02M3/335 |
| A,D | US 5 910 886 A (COLEMAN CHARLES) 8. Juni 1999 (1999-06-08) <br> * Spalte 3, Zeile 33 – Zeile 45 * <br> * Abbildung 2 * | 1,2 | |
| | | | **RECHERCHIERTE SACHGEBIETE (Int.Cl.7)** <br><br> H02M |

Der vorliegende Recherchenbericht wurde für alle Patentansprüche erstellt

| Recherchenort | Abschlußdatum der Recherche | Prüfer |
|---|---|---|
| MÜNCHEN | 17. Juli 2001 | ROIDER, A |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie, übereinstimmendes Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 01 10 8599

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

17-07-2001

| Im Recherchenbericht angeführtes Patentdokument | Datum der Veröffentlichung | Mitglied(er) der Patentfamilie | Datum der Veröffentlichung |
|---|---|---|---|
| US 6178099 B | 23-01-2001 | KEINE | |
| US 5910886 A | 08-06-1999 | WO 9925060 A | 20-05-1999 |

Für nähere Einzelheiten zu diesem Anhang : siehe Amtsblatt des Europäischen Patentamts, Nr.12/82